# EUROPEAN PATENT APPLICATION

(11) **EP 4 579 702 A1**
(43) Date of publication of application: **02.07.2025**
(21) Application number: 24215113.2
(22) Date of filing: 25.11.2024
(51) Int. Cl.: H01G 4/012, H01G 4/12, H01G 4/224, H01G 4/30, H01G 4/232

(54) **MULTILAYER ELECTRONIC COMPONENT**

(30) Priority: 27.12.2023 KR 20230192144
(71) Applicant: Samsung Electro-Mechanics Co., Ltd., Gyeonggi-do (KR)
(72) Inventor: Hwang, Jung Wun, Suwon-si, Gyeonggi-do (KR); Lee, Chae Dong, Suwon-si, Gyeonggi-do (KR)
(74) Representative: Grünecker Patent- und Rechtsanwälte PartG mbB

(57) **Abstract**

In a multilayer electronic component according to an embodiment of the present disclosure, a step of the multilayer electronic component may be alleviated by adjusting the shape of the reinforcing pattern included in the reinforcing portion disposed on at least one of one surface and the other surface of the capacitance formation portion in the first direction, and the occurrence of bending cracks may be suppressed.

## Description

### CROSS-REFERENCE TO RELATED APPLICATION(S)

This application claims benefit of priority to Korean Patent Application No. 10-2023-0192144 filed on December 27, 2023 in the Korean Intellectual Properties Office, the disclosure of which is incorporated herein by reference in its entirety.

### BACKGROUND

### 1. TECHNICAL FIELD

The present disclosure relates to a multilayer electronic component.

### 2. DESCRIPTION OF THE RELATED ART

A multilayer ceramic capacitor (MLCC), a multilayer electronic component, is a chip-type condenser mounted on the printed circuit boards of various electronic products such as an image display device, for example, a liquid crystal display (LCD), a plasma display panel (PDP), or the like, a computer, a smartphone, a mobile phone, and a circuit such as an On Board Charger (OBC) DC-DC converter of electric vehicles, to serve to charge or discharge electricity therein or therefrom.

In the past, as a method to improve bending strength of a multilayer ceramic capacitor, attempts were made to form dummy patterns on upper and lower surfaces of a capacitance formation portion. However, a general dummy pattern may be vulnerable to bending cracks since a shape of an end of a margin portion in a width direction is straight. In addition, when the dummy pattern is formed of a plurality of layers to sufficiently improve the strength thereof, a step may occur due to overlap between the dummy patterns in a stacking direction.

Accordingly, there is a need to improve a structure of the dummy pattern to prevent the occurrence of bending cracks and alleviate the step.

### SUMMARY

An aspect of the present disclosure is to prevent bending cracks that may occur when forming a dummy pattern.

An aspect of the present disclosure is to alleviate a step that may occur when forming a dummy pattern.

However, the problem to be solved by the present disclosure is not limited to the above-described contents, and will be more easily understood in the process of explaining specific embodiments of the present disclosure.

According to an aspect of the present disclosure, a multilayer electronic component includes a body including a dielectric layer, first and second internal electrodes alternately disposed in a first direction with the dielectric layer interposed therebetween, wherein a region of the body in which the first and second internal electrodes overlap in the first direction is referred to as a capacitance formation portion, and a reinforcing portion disposed on at least one of a first surface or a second surface of the capacitance formation portion opposing each other in the first direction; and an external electrode disposed on surfaces of the body opposing each other in a second direction, perpendicular to the first direction, wherein the reinforcing portion may include a plurality of reinforcing patterns including a plurality of conductive patterns alternately disposed in the first direction and disposed in a grid shape, and the plurality of conductive patterns may be disposed to be spaced apart from surfaces of the body opposing each other in a third direction perpendicular to the first direction and the second direction, and at least a portion of the plurality of conductive patterns may be in contact with the external electrode at both ends of the reinforcing portion in the second direction.

According to an aspect of the present disclosure, a multilayer electronic component includes a body including a dielectric layer, first and second internal electrodes alternately disposed with the dielectric layer interposed therebetween in a first direction, wherein a region of the body in which the first and second internal electrodes overlap in the first direction is referred to as a capacitance formation portion, and a reinforcing portion disposed on a first surface and a second surface of the capacitance formation portion opposing each other in the first direction; and an external electrode disposed on surfaces of the body opposing each other in a second direction, perpendicular to the first direction, wherein the reinforcing portion includes a first reinforcing pattern and a second reinforcing pattern not overlapping the first reinforcing pattern in the first direction, the first reinforcing pattern may include a plurality of 1-1 conductive patterns disposed to be spaced apart from each other in the second direction and a third direction perpendicular to the first direction and the second direction, and a plurality of 1-2 conductive patterns disposed between spaces by which adjacent 1-1 conductive patterns among the plurality of 1-1 conductive patterns are spaced apart in the second direction, the plurality of 1-2 conductive patterns are disposed to be spaced apart from each other in the second direction and the third direction, and the second reinforcing pattern may include a plurality of 2-1 conductive patterns disposed to be spaced apart from each other in the second direction and the third direction, and a plurality of 2-2 conductive patterns disposed between spaces by which adjacent 2-1 conductive patterns among the plurality of 2-1 conductive patterns are spaced apart in the second direction, the plurality of 2-2 conductive patterns are disposed to be spaced apart from each other in the second direction and the third direction.

### BRIEF DESCRIPTION OF DRAWINGS

The above and other aspects, features, and advantages of the present disclosure will be more clearly understood from the following detailed description, taken in combination with the accompanying drawings, in which:
FIG. 1 schematically illustrates a perspective view of a multilayer electronic component according to an embodiment;
FIG. 2 is a cross-sectional view taken along line I-I' in FIG. 1;
FIG. 3 is a cross-sectional view taken along line II-II' in FIG. 1;
FIG. 4 illustrates a cross-section corresponding to the cross-section in FIG. 1 taken along line I-I' in a multilayer electronic component according to an embodiment;
FIG. 5 illustrates a cross-section corresponding to the cross-section in FIG. 1 taken along line II-II' in a multilayer electronic component according to an embodiment;
FIGS. 6A and 6B are each a plan view illustrating a shape of an internal electrode according to an embodiment;
FIGS. 7A and 7B are each a plan view illustrating a shape of a reinforcing portion according to an embodiment; and
FIG. 8 is a plan view illustrating a shape of a first reinforcing portion according to an embodiment.

### DETAILED DESCRIPTION

Hereinafter, embodiments of the present disclosure will be described as follows with reference to the attached drawings. The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art. Accordingly, shapes and sizes of elements in the drawings may be exaggerated for clear description, and elements indicated by the same reference numeral are the same elements in the drawings.

In the drawings, irrelevant descriptions will be omitted to clearly describe the present disclosure, and to clearly express a plurality of layers and areas, thicknesses may be magnified. The same elements having the same function within the scope of the same concept will be described with use of the same reference numerals. Throughout the specification, when a component is referred to as "comprise" or "comprising," it means that it may further include other components as well, rather than excluding other components, unless specifically stated otherwise.

In the drawings, a first direction may be defined as a stacking direction or a thickness (T) direction, a second direction may be defined as a length (L) direction, and a third direction may be defined as a width (W) direction.

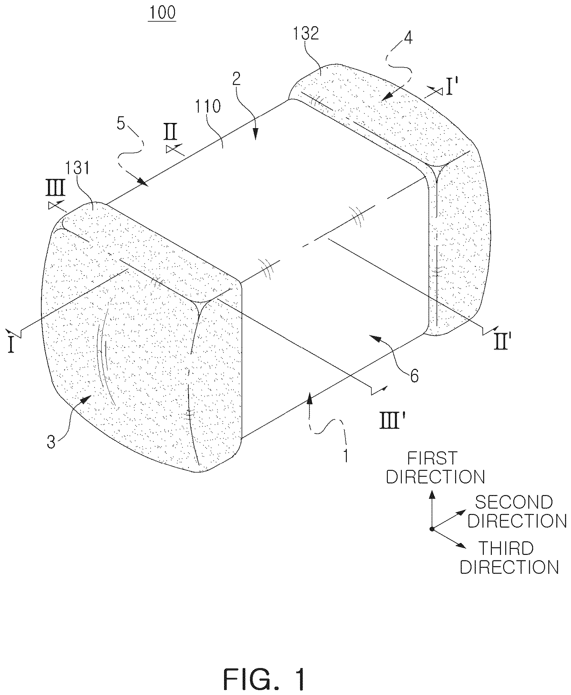

FIG. 1 schematically illustrates a perspective view of a multilayer electronic component according to an embodiment.

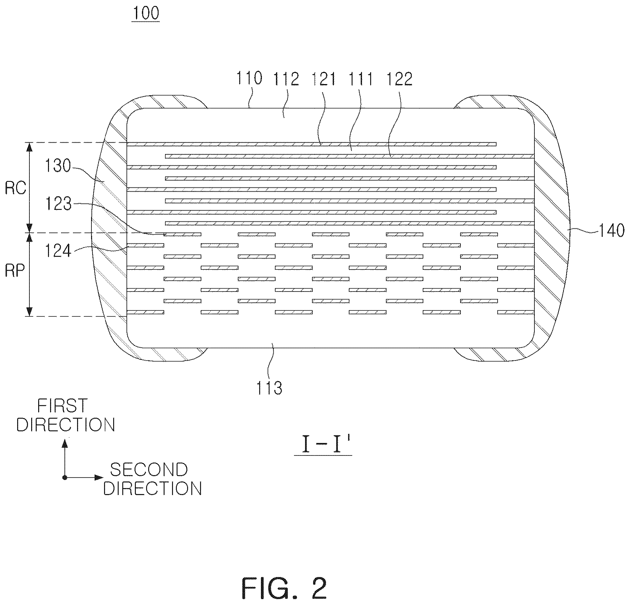

FIG. 2 is a cross-sectional view taken along line I-I' in FIG. 1.

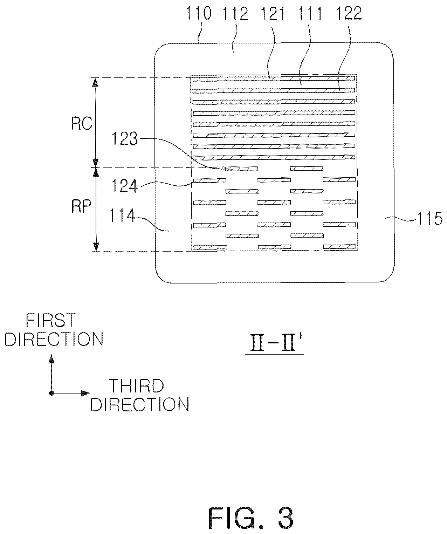

FIG. 3 is a cross-sectional view taken along line II-II' in FIG. 1.

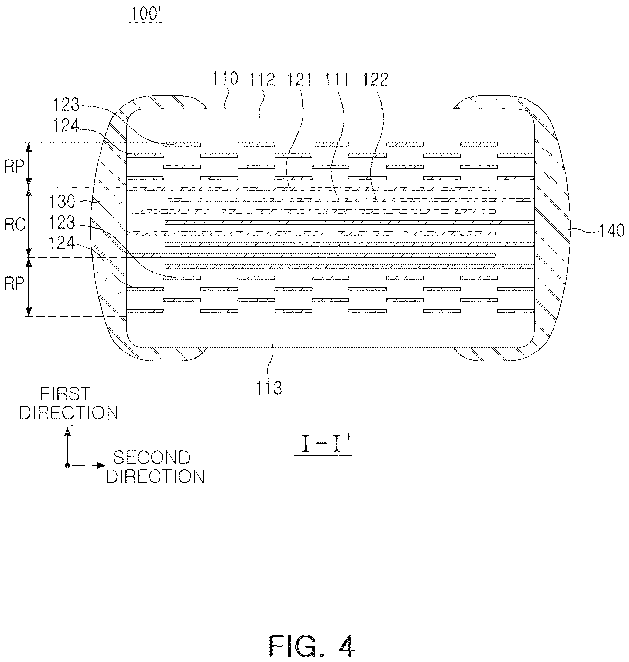

FIG. 4 illustrates a cross-section corresponding to the cross-section in FIG. 1 taken along line I-I' in a multilayer electronic component according to an embodiment.

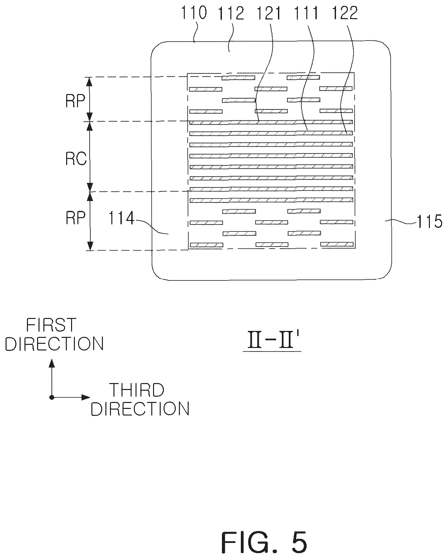

FIG. 5 illustrates a cross-section corresponding to the cross-section in FIG. 1 taken along line II-II' in a multilayer electronic component according to an embodiment.

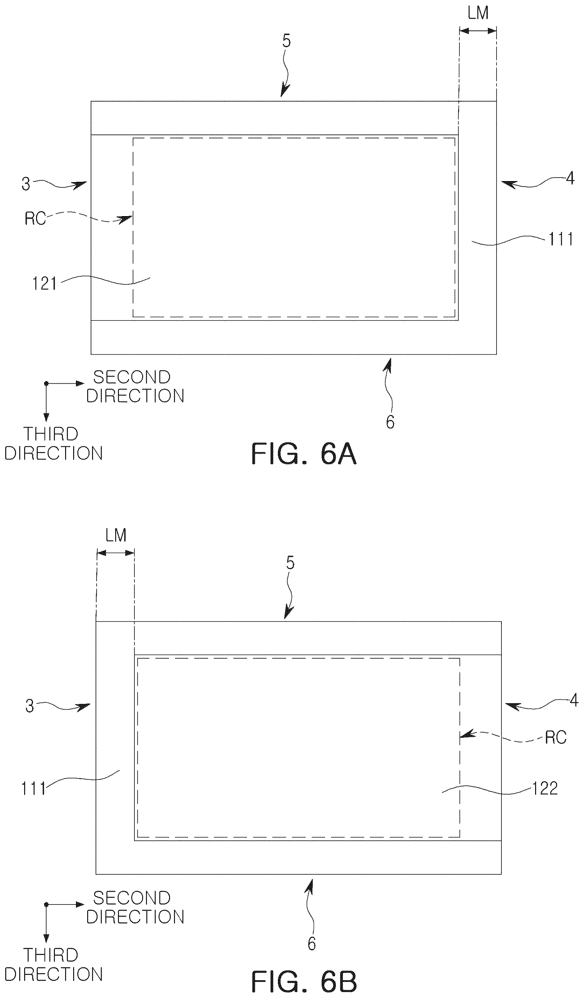

FIGS. 6A and 6B are each a plan view illustrating a shape of an internal electrode according to an embodiment.

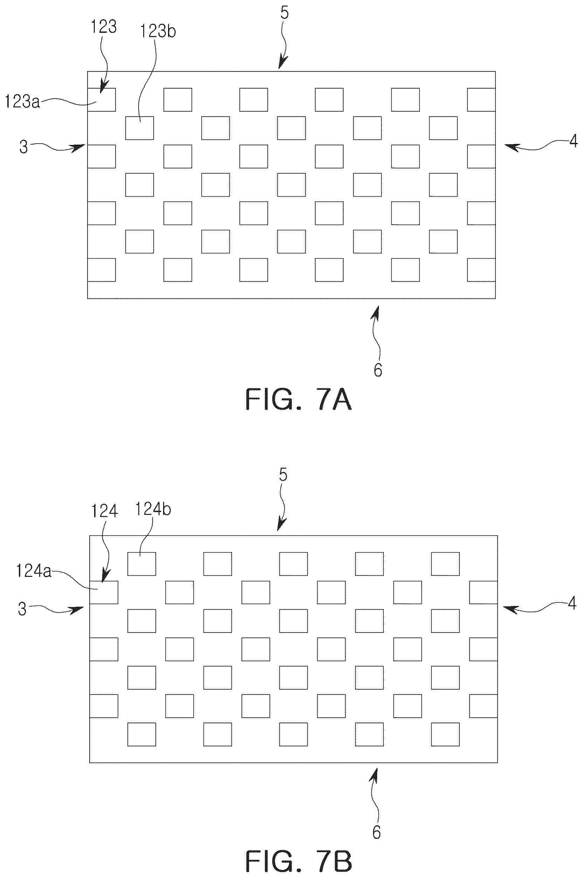

FIGS. 7A and 7B are each a plan view illustrating a shape of a reinforcing portion according to an embodiment.

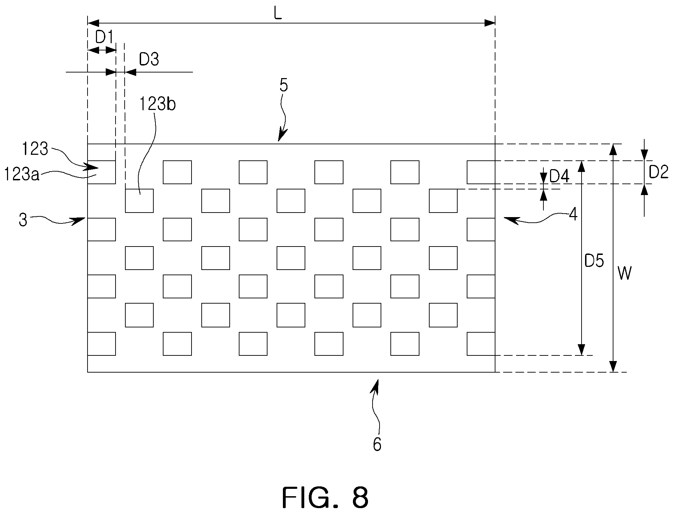

FIG. 8 is a plan view illustrating a shape of a first reinforcing portion according to an embodiment.

Hereinafter, multilayer electronic components 100 and 100' according to an embodiment of the present disclosure will be described in greater detail with reference to FIGS. 1 to 5, 8, and 9. In addition, a multilayer ceramic capacitor (hereinafter referred to as 'MLCC') will be described as an example of a multilayer electronic component, but the present disclosure is not limited thereto, and it may also be applied to various multilayer electronic components using a ceramic material, such as an inductor, piezoelectric elements, varistors, thermistors, or the like.

The multilayer electronic components 100 and 100' according to an embodiment of the present disclosure may include a body 110 including a dielectric layer 111, first and second internal electrodes 121 and 122 alternately disposed in a first direction with the dielectric layer interposed therebetween, and a reinforcing portion RP, wherein, when a region of the body in which the first and second internal electrodes overlap in the first direction is referred to as a capacitance formation portion RC, disposed on at least one of one surface or the other surface of the capacitance formation portion in the first direction, and external electrodes 130 and 140 disposed on surfaces of the body opposing each other in a second direction, perpendicular to the first direction, wherein when a direction, perpendicular to the first direction and the second direction is referred to as a third direction, the reinforcing portion may include a plurality of reinforcing patterns 123 and 124 including a plurality of conductive patterns 123a, 123b, 124a, and 124b alternately disposed in the first direction and disposed in a grid shape, the plurality of conductive patterns may be disposed to be spaced apart from surfaces of the body opposing each other in the third direction, and at least a portion of the plurality of conductive patterns may be in contact with the external electrodes at both ends of the reinforcing portion in the second direction.

The multilayer electronic components 100 and 100' according to an embodiment of the present disclosure may include a body 110 including a dielectric layer 111, first and second internal electrodes 121 and 122 alternately disposed in a first direction with the dielectric layer interposed therebetween, and a reinforcing portion RP, wherein, when a region of the body in which the first and second internal electrodes overlap in the first direction is referred to as a capacitance formation portion RC, disposed on at least one of one surface or the other surface of the capacitance formation portion in the first direction, and external electrodes 130 and 140 disposed on surfaces of the body opposing each other in a second direction, perpendicular to the first direction, wherein the reinforcing portion may include a first reinforcing pattern 123 and a second reinforcing pattern 124 not overlapping the first reinforcing pattern 123 in the first direction, and when a direction, perpendicular to the first direction and the second direction is referred to as a third direction, the first reinforcing pattern may include a plurality of 1-1 conductive patterns 123a disposed to be spaced apart from each other in the second direction and the third direction and a plurality of 1-2 conductive patterns 123b disposed between spaces by which the plurality of 1-1 conductive patterns are spaced apart in the second direction and disposed to be spaced apart from each other in the second direction and the third direction, and the second reinforcing pattern may include a plurality of 2-1 conductive patterns 124a disposed to be spaced apart from each other in the second direction and the third direction and a plurality of 2-2 conductive patterns 124b disposed between spaces by which the plurality of 2-1 conductive patterns are spaced apart in the second direction and disposed to be spaced apart from each other in the second direction and the third direction.

Hereinafter, each component included in the multilayer electronic components 100 and 100' according to an embodiment of the present disclosure will be described.

The body 110 may include a dielectric layer 111 and first and second internal electrodes 121 and 122 disposed alternately with the dielectric layer 111 interposed therebetween.

The body 110 is not limited to a particular shape, and may have a hexahedral shape or a shape similar to the hexahedral shape, as illustrated in the drawings. The body 110 may not have a hexahedral shape having perfectly straight lines because ceramic powder particles included in the body 110 may be contracted in a process in which the body is sintered. However, the body 110 may have a substantially hexahedral shape.

When a direction in which the first and second internal electrodes 121 and 122 described below are stacked is referred to as a first direction, a direction, perpendicular to the first direction is referred to as a second direction, and a direction, perpendicular to the first direction and the second direction is referred to as a third direction, the body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in the third direction.

As a margin region in which the internal electrodes 121 and 122 are not disposed overlaps on the dielectric layer 111, a step may occur due to a thickness of the internal electrodes 121 and 122, so that a corner connecting the first surface and the third to fifth surfaces and/or a corner connecting the second surface and the third to fifth surfaces may have a shape contracted to a center of the body 110 in the first direction when viewed with respect to the first surface 1 or the second surface 2. Alternatively, by contraction behavior during a sintering process of the body, a corner connecting the first surface and the third to sixth surfaces 3, 4, 5, and 6 and/or a corner connecting the second surface 2 and the third to sixth surfaces 3, 4, 5, and 6 may have a shape contracted to the center of the body 110 in the first direction when viewed with respect to the first surface 1 or the second surface 2. Alternatively, as an edge connecting respective surfaces of the body 110 to each other is rounded by performing an additional process to prevent chipping defects, or the like, the corner connecting the first surface 1 and the third to sixth surfaces 3 to 6 and/or the corner connecting the second surface 2 and the third to sixth surfaces 3 to 6 may have a rounded shape.

Meanwhile, in order to suppress a step caused by the internal electrodes 121 and 122, after the internal electrodes are cut so as to be exposed to the fifth and sixth surfaces 5 and 6 of the body after stacking, when margin portions 114 and 115 are formed by stacking a single dielectric layer or two or more dielectric layers on both side surfaces of the capacitance formation portion RC in a third direction (a width direction), a portion connecting the first surface to the fifth and sixth surfaces and a portion connecting the second surface to the fifth and sixth surfaces may not have a contracted form.

A plurality of dielectric layers 111 for forming the body 110 may be in a sintered state, and adjacent dielectric layers 111 may be integrated with each other, such that boundaries therebetween may not be readily apparent without using a scanning electron microscope (SEM). The number of stacked dielectric layers does not need to be particularly limited and can be determined considering the size of the stacked electronic component. For example, the body can be formed by stacking 400 or more dielectric layers.

The dielectric layer 111 may be formed by preparing a ceramic slurry containing ceramic powder, an organic solvent, and a binder, applying and drying the slurry on a carrier film to prepare a ceramic green sheet, and then sintering the ceramic green sheet. The ceramic powder is not particularly limited as long as sufficient electrostatic capacitance may be obtained therewith, but for example, barium titanate (BaTiO₃) -based powder may be used as the ceramic powder. For a more specific example, the ceramic powder may be barium titanate (BaTiO₃)-based powder, CaZrO₃-based paraelectric powder, and the like. For more specific examples, the barium titanate (BaTiO₃)-based powder may be, at least one of, BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1), and the CaZrO₃-based paraelectric powder may be (Ca₁₋ₓSrₓ)(Zr_{1-y}Ti_{y})O₃ (0<x<1, 0<y<1) .

According to the present disclosure, even when a thickness of the plurality of dielectric layers 111 is thin, it is possible to prevent a high-temperature load life from being reduced, and when the thickness of the dielectric layer is thick, the high-temperature load life may be further improved. Therefore, an average thickness of the dielectric layer is not particularly limited, and the average thickness of the dielectric layer 111 may be arbitrarily set depending on desired characteristics or purposes. For a specific example, the average thickness of the dielectric layer 111 may be 300 nm or more and 10 um or less. In addition, the average thickness of at least one of the plurality of dielectric layers 111 may be 300 nm or more and 10 um or less.

Here, the average thickness of the dielectric layer 111 may mean an average size of the dielectric layer 111 disposed between the internal electrodes 121 and 122 in the first direction. The average thickness of the dielectric layer 111 may be measured by scanning a cross-section of the body 110 in the first and second directions with a scanning electron microscope (SEM) at a magnification of 10,000. More specifically, an average value thereof may be measured by measuring the thickness of the dielectric layer 111 at multiple points, for example, at 30 points at equally spaced intervals in the second direction. The 30 points at equally spaced intervals may be designated in a capacitance formation portion RC to be described later. Meanwhile, if the average value is measured by extending the average value measurement to 10 dielectric layers 111, the average thickness of the dielectric layer 111 can be more generalized.

Internal electrodes 121 and 122 may be alternately disposed with the dielectric layer 111 in the first direction.

The internal electrodes 121 and 122 may include first and second internal electrodes 121 and 122. The first and second internal electrodes 121 and 122 may be alternately disposed to oppose each other with the dielectric layer 111 forming the body 110 interposed therebetween, and may be respectively connected to the third and fourth surfaces 3 and 4 of the body 110. Specifically, one end of the first internal electrode 121 may be connected to the third surface, and one end of the second internal electrode 122 may be connected to the fourth surface. That is, in an embodiment, the internal electrodes 121 and 122 may be in contact with the third surface 3 or the fourth surface 4.

As shown in FIG. 6A and FIG. 6B, the first internal electrode 121 may be connected to the third surface 3 and spaced apart from the fourth surface 4, and the second internal electrode 122 may be connected to the fourth surface 4 and spaced apart from the third surface 3. Accordingly, the first internal electrode 121 may not be connected to the second external electrode 140 and connected to the first external electrode 130, and the second internal electrode 122 may not be connected to the first external electrode 130 and connected to the second external electrode 140.

A material for forming the internal electrodes 121 and 122 is not particularly limited, and a material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

In addition, the internal electrodes 121 and 122 may be formed by printing a conductive paste for internal electrodes including one or more of nickel (Ni), copper (Cu), palladium (Pd), silver (Ag), gold (Au), platinum (Pt), tin (Sn), tungsten (W), titanium (Ti), and alloys thereof on a ceramic green sheet. A screen printing method or a gravure printing method may be used as a method of printing the conductive paste for internal electrodes, but an embodiment thereof is not limited thereto.

An average thickness of the internal electrodes 121 and 122 is not particularly limited, and may be arbitrarily set depending on desired characteristics or purposes. For a specific example, the average thickness of the internal electrodes 121 and 122 may be 300 nm or more and 10 um or less. In addition, the average thickness of at least one of the plurality of internal electrodes 121 and 122 may be 300 nm or more and 10 um or less.

For a total of 5 layers of internal electrode layers, 2 layers thereabove and 2 layers therebelow, among internal electrode layers, extracted from an image obtained by scanning a cross-section of the body 110 in length and thickness directions (L-T directions), cut from a central portion of the body 110 in a width direction, with a scanning electron microscope (SEM) based on a first layer of an internal electrode layer at a point at which a center line of the body in the longitudinal direction and a center line of the body in the thickness direction meet, the average thickness of the internal electrodes 121 and 122 may be measured by setting five points at equal intervals, two to the left and two to the right, centered on the one reference point, and then measuring the thickness at each point and calculating an average value thereof.

Referring to FIGS. 2 and 4, the body 110 may include a capacitance formation portion RC, a region of the body in which the first and second internal electrodes 121 and 122 overlap in the first direction. In addition, the capacitance formation portion RC is a portion contributing to capacitance formation of the capacitor, and may be formed by repeatedly stacking the plurality of first and second internal electrodes 121 and 122 with a dielectric layer 111 interposed therebetween.

Referring to FIG. 3 and FIG. 5, a region of the body 110 between a cross-section of the capacitance formation portion RC in the second direction and surfaces of the body 110 opposing each other in the second direction may be referred to as a length-margin portion. The length-margin portion may be a region including one of the internal electrodes 121 and 122.

Referring to FIGS. 2 to 5, a reinforcing portion RP may be disposed on at least one of one surface or the other surface of the capacitance formation portion RC in the first direction. The reinforcing portion RP may be a region included in the cover portions 112 and 113, a region of the body 110 disposed on one surface and the other surface of the capacitance formation portion RC in the first direction, and may include reinforcing patterns 123 and 124.

In the reinforcing portion RP, the reinforcing patterns 123 and 124 may be alternately disposed in the first direction, and a dielectric layer 111 may be disposed between the reinforcing patterns 123 and 124. That is, the reinforcing patterns 123 and 124 may be alternately disposed in the first direction with the dielectric layer 111 interposed therebetween. A specific structure of the reinforcing patterns 123 and 124 will be described later.

The cover portions 112 and 113 may be formed by stacking a single dielectric layer or two or more dielectric layers on the upper and lower surfaces of the capacitance formation portion RC in the first direction, and according to an embodiment of the present disclosure, a reinforcing portion RP may be formed inside the cover portions 112 and 113. That is, the cover portions 112 and 113 does not include the internal electrodes 121 and 122 and may include the reinforcing portion RP.

Meanwhile, a thickness of the cover portions 112 and 113 does not need to be particularly limited. However, to more easily achieve miniaturization and high capacitance of the multilayer electronic component, the thickness of the cover portions 112 and 113 may be 15 um or less.

An average thickness of the cover portions 112 and 113 may mean a size thereof in the first direction, and may be a value obtained by averaging the sizes of the cover portions 112 and 113 in the first direction, measured at five points having equal intervals above or below the capacitance formation portion RC.

Referring to FIGS. 3 and 5, margin portions 114 and 115 may be disposed on one surface and the other surface the capacitance formation portion RC in the third direction RC.

The margin portions 114 and 115 may include a first margin portion 114 disposed on the fifth surface 5 of the body 110 and a second margin portion 115 disposed on the sixth surface 6 thereof. That is, the margin portions 114 and 115 may be disposed on both end surfaces of the body in a width direction.

The margin portions 114 and 115 may mean a region between both ends of the first and second internal electrodes 121 and 122 and an interface of the body 110 in the cross-section of the body 110 taken in a width-thickness (W-T) direction, as illustrated in FIG. 3.

The margin portions 114 and 115 may basically serve to prevent damages to the internal electrodes due to physical or chemical stresses.

The margin portions 114 and 115 may be formed by applying a conductive paste to the ceramic green sheet, except where margin portions are to be formed, to form an internal electrode.

In addition, in order to suppress a step caused by the internal electrodes 121 and 122, after the internal electrodes are cut so as to be exposed to the fifth and sixth surfaces 5 and 6 of the body after stacking, the margin portions 114 and 115 may also be formed by stacking a single dielectric layer or two or more dielectric layers on both side surfaces of the capacitance formation portion RC in the third direction (width direction).

Meanwhile, a width of the margin portions 114 and 115 is not particularly limited. For example, the width of the margin portions 114 and 115 may be 5 to 300 um. However, in order to more easily implement miniaturization and high capacitance of the multilayer electronic component, an average width of the margin portions 114 and 115 may be 15 um or less.

The average width of the margin portions 114 and 115 may mean an average size of a region in which the internal electrode is spaced apart from the fifth surface in the third direction and an average size of a region in which the internal electrode is spaced apart from the sixth surface in the third direction, and may be a value obtained by averaging sizes of the margin portions 114 and 115 measured at five points at equal intervals in the third direction in terms of the capacitance formation portion RC.

Accordingly, in an embodiment, an average size of a region in which the internal electrodes 121 and 122 are spaced apart from the fifth and sixth surfaces in the third direction may be 15 um or less, respectively.

External electrodes 130 and 140 may be disposed on the body 110.

Specifically, the external electrodes 130 and 140 may include first and second external electrodes 130 and 140 respectively disposed on the third and fourth surfaces 3 and 4 of the body 110, to be respectively connected to the first and second internal electrodes 121 and 122.

In the present disclosure, a structure in which the multilayer electronic component 100 has two external electrodes 130 and 140 is described. However, the number and shape of the external electrodes 130 and 140 may be changed depending on the shape of the internal electrodes 121 and 122 or for other purposes.

Meanwhile, the external electrodes 130 and 140 may be formed of any material having electrical conductivity, such as metal, and a specific material may be determined in consideration of electrical properties and structural stability, and the external electrodes 131 and 132 may have a multilayer structure.

For example, the external electrodes 130 and 140 may include an electrode layer disposed on the body 110 and a plating layer formed on the electrode layer.

For a more specific example of the electrode layer, the electrode layer may be a sintered electrode including a conductive metal and glass, or a resin-based electrode including a conductive metal and resin.

In addition, the electrode layer may have a form in which a sintered electrode and a resin-based electrode are sequentially formed. In addition, the electrode layer may be formed by transferring a sheet including a conductive metal onto a body or by transferring a sheet including a conductive metal onto a sintered electrode. In addition, the electrode layer may be formed as a plating layer, or may be a layer formed using a deposition method such as sputtering or atomic layer deposition (ALD).

A material having excellent electrical conductivity may be used as the conductive metal included in the electrode layer, and is not particularly limited. For example, the conductive metal may be at least one of nickel (Ni), copper (Cu), and alloys thereof.

The plating layer plays a role in improving mounting characteristics. The type of the plating layers is not limited to any particular example, and may be a plating layer including at least one of Ni, Sn, Pd, and alloys thereof, and may be formed of a plurality of layers.

For a more specific example of the plating layer, the plating layer may be a Ni plating layer or a Sn plating layer, may have a form in which a Ni plating layer and a Sn plating layer are sequentially formed on the electrode layer, and have a form in which a Sn plating layer, a Ni plating layer, and a Sn plating layer are sequentially formed. In addition, the plating layer may include a plurality of Ni plating layers and/or a plurality of Sn plating layers. In addition, the plating layer may have a form in which a Ni plating layer and a Pd plating layer are sequentially formed on the electrode layer.

In the prior art, as a method for improving bending strength of a multilayer electronic component such as a multilayer ceramic capacitor, attempts were made to form a dummy pattern on an upper surface and a lower surface of a capacitance formation portion. However, a general dummy pattern may be vulnerable to bending cracks because a shape of an end of a margin portion in a width direction is straight. In addition, when the dummy pattern is formed of a plurality of layers to sufficiently improve strength, a step portion may occur due to overlap between the dummy patterns in the stacking direction.

Accordingly, in the multilayer electronic components 100 and 100', a reinforcing portion RP may be disposed on at least one of one surface or the other surface of the capacitance formation portion RC in the first direction, the reinforcing portion RP may include a plurality of reinforcing patterns 123 and 124 including a plurality of conductive patterns 123a, 123b, 124a, and 124b disposed alternately in the first direction and disposed in a grid shape, the plurality of conductive patterns 123a, 123b, 124a, and 124b may be disposed to be spaced apart from the surfaces 5 and 6 of the body 110, opposing each other in the third direction, and at least a portion of the plurality of conductive patterns 123a, 123b, 124a, and 124b may be disposed to contact the external electrodes 130 and 140 at both ends of the reinforcing portion RP in the second direction, so that bending cracks of the multilayer electronic components 100 and 100' may be prevented and a step portion may be alleviated.

Specifically, since the reinforcing portion RP includes a plurality of reinforcing patterns 123 and 124 including a plurality of conductive patterns 123a, 123b, 124a, and 124b disposed alternately in the first direction and disposed in a grid shape, irregularities may be formed at an end in the third direction, compared to a conventional dummy pattern. Accordingly, it is possible to suppress the occurrence of bending cracks at the end of the dummy pattern in the third direction in the multilayer electronic component 100. In addition, since the plurality of conductive patterns 123a, 123b, 124a, and 124b alternately disposed in the first direction are disposed in a grid form, the step due to the overlap of the plurality of reinforcing patterns 123 and 124 in the first direction may be alleviated.

In addition, moisture resistance reliability can be secured by disposing the plurality of conductive patterns to be spaced apart from the surfaces 5 and 6 of the body 110 opposing each other in the third direction, and at least a portion of the conductive patterns 123a, 123b, 124a, and 124b may be in contact with the external electrodes 130 and 140 at the end of the reinforcing portion RP in the second direction, so that the bonding strength between the external electrodes 130 and 140 and the body 110 may be improved.

The components of the plurality of conductive patterns 123a, 123b, 124a, and 124b are not particularly limited, and may include the same components as the conductive metal included in the internal electrodes 121 and 122. For example, the plurality of conductive patterns 123a, 123b, 124a, and 124b include at least one of nickel (Ni), copper (Cu), palladium (Pd), silver (Ag), gold (Au), platinum (Pt), and tin (Sn), tungsten (W), titanium (Ti), and alloys thereof.

In an embodiment, the reinforcing portion RP may include a first reinforcing pattern 123 and a second reinforcing pattern 124, not overlapping the first reinforcing pattern 123 in the first direction. In this case, since the first reinforcing pattern 123 and the second reinforcing pattern 124 can be prevented from overlapping in the first direction, the effect of alleviating the step portion according to the present disclosure may be further improved.

Referring to FIGS. 7A and 7B, the first reinforcing pattern 123 may include a 1-1 conductive pattern 123a and a 1-2 conductive pattern 123b, the second reinforcing pattern 124 may include a 2-1 conductive pattern 124a, and a 2-2 conductive pattern 124b. The 1-1 conductive pattern 123a and the 1-2 conductive pattern 123b may form a grid pattern, and the 2-1 conductive pattern 124a and the 2-2 conductive pattern 124b may form a grid pattern.

Specifically, in an embodiment, the first reinforcing pattern 123 may include a plurality of 1-1 conductive patterns 123a disposed to be spaced apart from each other in the second and third directions, and a plurality of 1-2 conductive patterns 123b disposed between spaces by which the plurality of 1-1 conductive patterns 123a are spaced apart in the second direction and disposed to be spaced apart from each other in the second and third directions, and the second reinforcing pattern 124 may include a plurality of 2-1 conductive patterns 124a disposed to be spaced apart from each other in the second and third directions, and a plurality of 2-2 conductive patterns 124b disposed between spaces by which the plurality of 2-1 conductive patterns 124a are spaced apart in the second direction and disposed to be spaced apart from each other in the second and third directions.

Meanwhile, the shapes of the grid patterns of the 1-1 conductive pattern 123a and the 1-2 conductive pattern 123b and the shapes of the grid patterns of the 2-1 conductive pattern 123a and the 2-2 conductive pattern 124b may be formed so that the first reinforcing pattern 123 and the second reinforcing pattern 124 do not overlap in the first direction, as described above. Specifically, the 1-1 conductive pattern 123a may be disposed so as not to overlap the 2-1 conductive pattern 124a and the 2-2 conductive pattern 124b in the first direction, and the 1-2 conductive pattern 124b may be disposed so as not to overlap the 2-1 conductive pattern 124a and the 2-2 conductive pattern 124b in the first direction.

In an embodiment, the 1-1 conductive pattern 123a and the 1-2 conductive pattern 123b may be disposed to be offset in the third direction, and the 2-1 conductive pattern 124a and the 2-2 conductive pattern 124b may be disposed to be offset in the third direction. In this case, a distance therebetween to be offset in the third direction may be equal to or greater than an average width of the conductive patterns 123a, 123b, 124a, and 124b in the third direction. Accordingly, irregularities are formed at the ends of the reinforcing patterns 123 and 124 in the third direction, thereby suppressing the occurrence of bending cracks in the multilayer electronic components 100 and 100'.

Referring to FIGS. 6A, 6B, and 8, if a region of the body disposed on one surface and the other surface of the capacitance formation portion RC in the second direction is referred to as a length-margin portion, an average length of the length-margin portion in the second direction may be represented by LM, an average length of the 1-1 conductive pattern 123a and the 1-2 conductive pattern 123b in the second direction may be represented by D1, an average width of the 1-1 conductive pattern 123a and the 1-2 conductive pattern 123b in the third direction may be represented by D2, a distance by which the 1-1 conductive pattern 123a and the 1-2 conductive pattern 123b, closest to the 1-1 conductive pattern are spaced apart in the second direction may be represented by D3, a distance by which the 1-1 conductive pattern 123a and the 1-2 conductive pattern 123b, closest to the 1-1 conductive pattern are spaced apart in the third direction may be represented by D4, a maximum width of the body 110 in the third direction may be represented by W, and a maximum width of the first reinforcing pattern 123 in the third direction may be represented by D5.

In FIG. 8, the characteristics of the first reinforcing pattern 123, the 1-1 conductive pattern 123a, and the 1-2 conductive pattern 123b are explained, but this can also be applied to the second reinforcing pattern 124, the 2-1 conductive pattern 124a, and the 2-2 conductive pattern 124b.

In an embodiment, D1 and D2 may satisfy 0.35D1 ≤ D2 ≤ D1.

When D1 is less than 0.35LM, the length of the reinforcing pattern 123 connected to the external electrode is short, so the effect of preventing bending cracks may be somewhat insufficient. Meanwhile, when D1 exceeds 0.95LM, if distortion occurs depending on pressure and temperature conditions of a stacking process of the reinforcement patten 123, the conductive pattern 123a, in contact with the third surface 3 or the fourth surface 4 may overlap the capacitance formation portion RC in the first direction.

Accordingly, in an embodiment, the effect of preventing the occurrence of bending cracks may be sufficiently secured by ensuring that D1 and LM satisfy 0.35LM ≤ D1 ≤ 0.95LM, and a phenomenon in which the conductive pattern 123a, in contact with the third surface 3 or the fourth surface 4 overlaps the capacitance formation portion RC in the first direction may be prevented.

In an embodiment, D1 and D2 may satisfy 0.35D1 ≤ D2 ≤ D1.

When D2 is less than 0.35D1, the length of the conductive pattern in the third direction may be shortened and the effect of improving bending strength due to printing interruption or bleeding may be insufficient, and when D2 exceeds D1, since the conductive patterns 123a and 123b are difficult to be uniformly distributed on the reinforcing pattern 123, the effect of improving the bending strength of the multilayer electronic components 100 and 100' may be insufficient.

Accordingly, in an embodiment, by uniformly forming the conductive patterns 123a and 123b over the entire reinforcing pattern 123, so that D1 and D2 satisfy 0.35D1 ≤ D2 ≤ D1, the bending strength of the multilayer electronic components 100 and 100' may be improved.

In an embodiment, D3 may satisfy 0.5 um ≤ D3 ≤ 80 µm.

When D3 is less than 0.5 um, it may be difficult to form the conductive patterns 123a and 123b to be spaced apart in the second direction depending on a printing resolution of the reinforcing pattern 123. When D3 exceeds 80 µm, a separation distance between the conductive patterns 123a and 123b may be excessive, and an area of the conductive patterns 123a and 123b may be reduced, and accordingly, the effect of improving the bending strength of the multilayer electronic components 100 and 100' may be somewhat insufficient.

Accordingly, in an embodiment, by ensuring that D3 satisfies 0.5 um ≤ D3 ≤ 80 µm, overlapping of the conductive patterns 123a and 123b in the second direction may be prevented, and securing a sufficient area of the conductive patterns 123a and 123b, a step of the multilayer electronic components 100 and 100' may be alleviated, and a decrease in the bending strength may be prevented.

Likewise, in an embodiment, D4 may satisfy 0.05 um ≤ D4 ≤ 80 um, and accordingly, the step of the multilayer electronic components 100 and 100' may be alleviated, and a decrease in the bending strength may be prevented.

Meanwhile, in order to improve the bending strength of the multilayer electronic components 100 and 100' and alleviate the step, a maximum width of the reinforcing pattern 123 in the third direction may be equal to or greater than the maximum width of the capacitance formation portion RC in the third direction. However, considering errors in a cutting process of the multilayer electronic components 100 and 100', an upper limit value of the maximum width of the reinforcing pattern 123 in the third direction may be determined. For example, in an embodiment, D5 and W may satisfy 0.4W ≤ D5 ≤ 0.97W.

The method of measuring LM, D1, D2, D3, D4, D5, and W is not particularly limited. For example, a scanning electron microscope (SEM) or any other methods and/or tools appreciated by one of ordinary skill in the art, even if not described in the present disclosure, may be used.

For convenience of explanation, LM is illustrated in FIGS. 6A and 6B, which is a plan view viewed in the first direction, but LM may be measured as a length by which the first internal electrode 121 is spaced apart from the fourth surface or a length by which the second internal electrode 122 are spaced apart from the third surface, in cross-sections of the multilayer electronic components 100 and 100' in the first and second directions, polished to a central portion thereof in the third direction. In addition, LM can be further generalized by taking the average value of the length in the second direction measured in a region in which the length-margin portion is divided into three parts in the first direction.

D1, D2, D3, D4, D5, and W may be measured in cross-sections of the multilayer electronic components 100 and 100' in the second and third directions by polishing the multilayer electronic components 100 and 100' in the first direction, and exposing the reinforcing pattern 123.

Specifically, D1 may be an average value of the length in the second direction, measured from any five or more conductive patterns 123a, 123b, 124a, and 124b, and D2 may be an average value of the width in the third direction, measured from any five or more conductive patterns 123a, 123b, 124a, and 124b.

In addition, D3 and D4 may be measured as lengths of a distance in which any conductive pattern and a conductive pattern, adjacent to the any conductive pattern in the second direction or third direction, and may be average values of the measured values for any five or more conductive patterns.

In addition, D5 may mean a width in the third direction between both ends of the reinforcing pattern 123, located outermost) in the third direction, and W may mean a width in the third direction between both ends of the body 110 located outermost in the third direction.

As set forth above, according to the aforementioned embodiments, by adjusting the shape of a reinforcing pattern included in a reinforcing portion disposed on at least one surface of one surface or the other surface of a capacitance formation portion in a first direction, a step of the multilayer electronic component may be alleviated, and the occurrence of bending cracks may be suppressed.

Although the embodiments of the present disclosure have been described in detail above, the present disclosure is not limited by the above-described embodiments and the accompanying drawings, and is intended to be limited by the appended claims. Therefore, various forms of substitution, modification, and change will be possible by those skilled in the art within the scope of the technical spirit of the present disclosure described in the claims, which also falls within the scope of the present disclosure.

In addition, the expression 'one embodiment' used in the present disclosure does not mean the same embodiment, and is provided to emphasize and describe different unique characteristics. However, one embodiment presented above is not excluded from being implemented in combination with features of another embodiment. For example, even if a matter described in one specific embodiment is not described in another embodiment, it can be understood as a description related to another embodiment, unless there is a description contradicting or contradicting the matter in the other embodiment.

Terms used in this disclosure are only used to describe one embodiment, and are not intended to limit the disclosure. In this case, singular expressions include plural expressions unless the context clearly indicates otherwise.

While the example embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including:
a dielectric layer,
first and second internal electrodes alternately disposed in a first direction with the dielectric layer interposed therebetween, wherein a region of the body in which the first and second internal electrodes overlap in the first direction is referred to as a capacitance formation portion, and
a reinforcing portion disposed on at least one of a first surface or a second surface of the capacitance formation portion opposing each other in the first direction; and
an external electrode disposed on surfaces of the body opposing each other in a second direction perpendicular to the first direction,
wherein the reinforcing portion includes a plurality of reinforcing patterns including a plurality of conductive patterns alternately disposed in the first direction and disposed in a grid shape, and
the plurality of conductive patterns are disposed to be spaced apart from surfaces of the body opposing each other in a third direction perpendicular to the first direction and the second direction, and at least a portion of the plurality of conductive patterns are in contact with the external electrode at both ends of the reinforcing portion in the second direction.

2. The multilayer electronic component of claim 1, wherein, when a region of the body disposed on a third surface and a fourth surface of the capacitance formation portion in the second direction is referred to as a length-margin portion, an average length of the length-margin portion in the second direction is referred to as LM, and an average length of one conductive pattern among the plurality of conductive patterns in the second direction is referred to as D1,
0.35LM ≤ D1 ≤ 0.95LM is satisfied.

3. The multilayer electronic component of claim 1, wherein, when an average length of one conductive pattern among the plurality of conductive patterns in the second direction is referred to as D1, and an average width of the conductive pattern in the third direction is referred to as D2,
0.35D1 ≤ D2 ≤ D1 is satisfied.

4. The multilayer electronic component of claim 1, wherein, when a length, in the second direction, of a space between adjacent conductive patterns among the plurality of conductive patterns is referred to as D3,
0.5pm ≤ D3 ≤ 80pm is satisfied.

5. The multilayer electronic component of claim 1, wherein, when a length, in the third direction, of a space between adjacent conductive patterns among the plurality of conductive patterns is referred to as D4,
0.05µm ≤ D4 ≤ 80pm is satisfied.

6. The multilayer electronic component of claim 1, wherein, when a maximum width of the body in the third direction is referred to as W, and a maximum width of one reinforcing pattern among the plurality of reinforcing patterns in the third direction is referred to as D5,
0.4W ≤ D5 ≤ 0.97W is satisfied.

7. The multilayer electronic component of claim 1, wherein the plurality of reinforcing patterns are alternately disposed with the dielectric layer interposed therebetween.

8. The multilayer electronic component of claim 1, wherein, adjacent rows of reinforcing patterns among the plurality of reinforcing patterns do not overlap along the first direction.

9. The multilayer electronic component of claim 8, wherein, in a cross-section of the multilayer electronic component along the first and second directions, the plurality of conductive patterns overlap a central portion of the capacitance formation portion.

10. The multilayer electronic component of claim 8, wherein, in a cross-section of the multilayer electronic component along the first and third directions, the plurality of conductive patterns overlap a central portion of the capacitance formation portion.

11. The multilayer electronic component of claim 1, wherein the reinforcing portion includes a first reinforcing pattern and a second reinforcing pattern not overlapping the first reinforcing pattern in the first direction.

12. The multilayer electronic component of claim 1, wherein the first reinforcing pattern includes a plurality of 1-1 conductive patterns disposed to be spaced apart from each other in the second direction and a third direction perpendicular to the first direction and the second direction, and a plurality of 1-2 conductive patterns disposed between spaces by which adjacent 1-1 conductive patterns among the plurality of 1-1 conductive patterns are spaced apart in the second direction, the plurality of 1-2 conductive patterns are disposed to be spaced apart from each other in the second direction and the third direction, and
the second reinforcing pattern includes a plurality of 2-1 conductive patterns disposed to be spaced apart from each other in the second direction and the third direction, and a plurality of 2-2 conductive patterns disposed between spaces by which adjacent 2-1 conductive patterns among the plurality of 2-1 conductive patterns are spaced apart in the second direction, the plurality of 2-2 conductive patterns are disposed to be spaced apart from each other in the second direction and the third direction.

13. The multilayer electronic component of claim 12, wherein at least one 1-1 conductive pattern among the plurality of 1-1 conductive patterns is offset from at least one 1-2 conductive pattern among the plurality of 1-2 conductive patterns in the third direction, and at least one 2-1 conductive pattern among the plurality of 2-1 conductive patterns is offset from at least one 2-2 conductive pattern among the plurality of 2-2 conductive patterns in the third direction.

14. The multilayer electronic component of claim 12, wherein the first reinforcing pattern and the second reinforcing pattern are disposed to be spaced apart from surfaces of the body opposing each other in the third direction, and at least a portion of the plurality of 1-1 conductive patterns and the plurality of 2-1 conductive patterns are in contact with the external electrode at both ends of the reinforcing portion in the second direction.

15. The multilayer electronic component of claim 12, wherein the first reinforcing pattern and the second reinforcing pattern are disposed with the dielectric layer interposed therebetween.
